(19) Europäisches Patentamt / European Patent Office / Office européen des brevets

(11) **EP 1 853 436 B1**

(12) **EUROPÄISCHE PATENTSCHRIFT**

(45) Veröffentlichungstag und Bekanntmachung des Hinweises auf die Patenterteilung:
**14.09.2011 Patentblatt 2011/37**

(21) Anmeldenummer: **06706009.5**

(22) Anmeldetag: **24.02.2006**

(51) Int Cl.:
**B60B 27/00** (2006.01)

(86) Internationale Anmeldenummer:
**PCT/DE2006/000340**

(87) Internationale Veröffentlichungsnummer:
**WO 2006/092119 (08.09.2006 Gazette 2006/36)**

(54) **STIRNVERZAHNUNG FÜR EINE ANTREIBBARE RADNABE**

FACE SPLINE FOR A DRIVEN WHEEL HUB

DENTURE DROITE POUR UN MOYEU DE ROUE A ENTRAINEMENT

(84) Benannte Vertragsstaaten:
**FR GB IT**

(30) Priorität: **04.03.2005 DE 102005009938**

(43) Veröffentlichungstag der Anmeldung:
**14.11.2007 Patentblatt 2007/46**

(60) Teilanmeldung:
**11165259.0 / 2 363 301**

(73) Patentinhaber: **Schaeffler Technologies GmbH & Co. KG**
**91074 Herzogenaurach (DE)**

(72) Erfinder:
• **LANGER, Roland**
**97523 Schwanfeld (DE)**
• **NIEBLING, Peter**
**97688 Bad Kissingen (DE)**
• **MASUR, Ernst**
**97508 Untereuerheim (DE)**
• **HEISS, Ralf**
**97421 Schweinfurt (DE)**
• **FÜLLER, Benno**
**97753 Karlstadt (DE)**

(56) Entgegenhaltungen:
DE-A1- 3 636 243     DE-C1- 3 116 720
US-A- 4 047 770      US-A- 6 146 022

## Beschreibung

### Gebiet der Erfindung

Die Erfindung betrifft eine Stirnverzahnung eines in Umfangsrichtung um eine Rotationsachse verlaufenden Zahnkranzes an einer Radlageranordnung für eine antreibbare Radnabe, wobei die Stirnverzahnung für einen spielfreien Eingriff in eine der Stirnverzahnung zugewandte Gegenverzahnung vorgesehen ist und dabei die Zähne der Stirnverzahnung so keilförmig ausgebildet sind, dass die geometrischen Linien der Stirnverzahnung zentral in einem gemeinsamen Punkt auf der Rotationsachse zusammentreffen und sich die Zähne somit in radiale Richtung auf die Rotationsachse erstrecken.

### Hintergrund der Erfindung

Eine derartige Stirnverzahnung ist in DE 31 16 720 C1 näher beschrieben. In die Stirnverzahnung greift eine entsprechende Gegenverzahnung einer Antriebswelle des Fahrzeuges ein. Die Gegenverzahnung ist in der Regel an einer Glocke oder an einem Stumpf der Glocke eines Gleichlaufgelenkes ausgebildet.

Bei der Montage des Antriebselementes in die Radnabenanordnung zentrieren sich das Antriebselement und die Radnabe bezüglich der Rotationsachse aufgrund der Geometrie der Hirth-Verzahnung zueinander. Eine hohe Rundlaufgenauigkeit an der Verbindung im Fahrbetrieb ist somit abgesichert. Die Montage des Gelenkteils zur Nabe gestaltet sich einerseits aufgrund der Selbstzentrierung einfach, bedarf andererseits jedoch einer sehr hohen axialen Vorspannkraft.

Die Flanken aller Zähne der Stirnverzahnung stehen mit beiden Flanken aller Zähne der Gegenverzahnung im Eingriff. Die Verzahnungen sind mittels eines oder mehrerer Schraubelemente axial verspannt. Drehmomente werden durch den aus Flächenpressung erzeugten Kraft - Formschluss auf die Radnabe übertragen.

Die Verbindung des Gelenkteils mit einer Radnabe ist insbesondere dann von Vorteil, wenn hohe Momente vom Antrieb zum Rad oder u.U. auch im umgekehrten Momentenfluss übertragen werden sollen. Oft sind die üblicherweise eingesetzten Paarungen aus Innen- und Außenverzahnungen bauraumtechnisch und somit hinsichtlich der Festigkeit ausgereizt, so dass die Stirnverzahnung eine sichere und Bauraum sparende Alternative zu diesen ist. Die starre Auslegung zur Übertragung von hohen Drehmomenten zum Rad kann sich dann nachteilig auswirken, wenn im Falle von Überlast ein Bruch der Radnabe im ungünstigsten Fall zum Verlust des Fahrzeugrades führt.

### Zusammenfassung der Erfindung

Die Aufgabe der Erfindung ist es daher, eine Stirnverzahnung zu schaffen mit deren Gestaltung die zuvor genannten Nachteile vermieden werden.

Diese Aufgabe ist dadurch gelöst, dass die für den Eingriff vorgesehenen Flanken der Zähne der Stirnverzahnung jeweils mit einem Flankenwinkel größer als 20° und kleiner als 30° geneigt sind. Der Flankenwinkel ist im Falle einer symmetrisch ausgebildeten Verzahnung die Hälfte des Zahnwinkels. Die Flanken sind mit dem Flankenwinkel zu einer gedachten und von der Rotationsachse abgehenden Teilungsebene geneigt.

Den Abmessungen und Änderungen der Abmessungen von Stirnverzahnungen sind an Radlagerungen aus Bauraumgründen Grenzen gesetzt. Der Teilkreisdurchmesser (mittlerer Umfang der Stirnverzahnung um die Rotationsachse) der Verzahnung ist demnach in der Regel innerhalb sehr enger Grenzen festgeschrieben. Demnach kann das Verhalten der Verzahnung, beispielsweise gegen Belastungen aus den Antriebsdrehmomenten kaum oder nicht durch Änderungen des Teilkreises der Verzahnung beeinflusst werden. Mit der Erfindung wird die Geometrie der einzelnen Zähne der Verzahnung über den Flankenwinkel so beeinflusst, dass hinsichtlich Montage und hinsichtlich der Belastungen aus Drehmomenten eine optimale Anzahl von Zähnen auf vorgegebenem Umfang festgelegt werden kann. Der Flankenwinkel der spielfrei im Eingriff mit der Gegenverzahnung stehenden wirksamen Flanken beträgt vorzugsweise 22,5°. Durch diese Gestaltung sind die Vorspannkräfte bei der Montage wegen der relativ niedrigen Axialkraftkomponenten in der Verzahnung gering gehalten. Der Querschnitt jedes einzelnen Zahnes in der Zahnwurzel ist so ausgelegt, dass die Stirnverzahnung hohe Drehmomente im Nennbetrieb überträgt, jedoch bei einem vorgeschriebenen Bruchmoment nachgibt.

Mit einer Ausgestaltung der Erfindung ist vorgesehen, dass Zahnlücken der Stirnverzahnung zumindest zwischen jeweils zwei an der Zahnlücke einander gegenüberliegenden der Flanken (von Flanke zu Flanke) mit wenigstens einem Fußradius konkav verrundet sind - und dass der Zahnkopf des jeweiligen der Zähne zumindest von einer Flanke zur anderen Flanke eines jeweiligen der Zähne mit wenigstens einem konvexen Kopfradius verrundet ist. Es ist außerdem vorgesehen, dass der Kopfradius immer größer ist als der Fußradius. Aufgrund dessen berührt der Zahnkopf der Gegenverzahnung nicht die Zahnlücke der Stirnverzahnung im Grund und der Zahnkopf der Stirnverzahnung nicht die Zahnlücke der Gegenverzahnung im Grund. Das spielfreie Anliegen der wirksamen Flanken ist abgesichert. Die Stirnverzahnung und die Gegenverzahnung nach Erfindung können identisch ausgebildet sein. Wenn die Verzahnung vorzugsweise spanlos durch Umformen mit sog. Döpperwerkzeugen eingebracht wird, kann für beide Verzahnungen das gleiche Werkzeug verwendet werden.

Die Größe der Radien beeinflusst außerdem die Höhe der Zähne der Stirnverzahnung und damit den Widerstand der Verzahnung gegen Belastungen. Ausgestaltungen der Erfindung sehen deshalb vor, dass ein Quotient aus größter theoretischer Zahnhöhe des jeweiligen Zahnes und dem Kopfradius mindestens der Zahl Fünf und maximal der Zahl Neun ist:

$$5 \leq H_{th}/R \leq 9.$$

Die theoretische Zahnhöhe ist in der Symmetrie oder Teilungsebene der größte axiale Abstand zwischen einer ersten Schnittkante in der Kopfebene und einer zweiten Schnittkante in der Fußebene des Zahnes. In den Schnittkanten treffen jeweils zwei einander zugewandte geometrische Ebenen aufeinander, durch die zumindest der Teil der Flanken beschrieben ist, der mit der Gegenverzahnung im Eingriff steht. Demnach treffen sich in der ersten Schnittkante die geometrischen Ebenen der Flanken eines Zahnes, die den doppelten Flankenwinkel zwischen sich einschließen zahnkopfseitig. In der zweiten Schnittkante treffen sich die geometrischen Ebenen von jeweils zwei an jeweils einer Zahnlücke gegenüberliegenden Flanken zueinander benachbarter Zähne zahnfußseitig.

Gleichzeitig oder alternativ ist ein Quotient aus größter theoretischer Zahnhöhe des jeweiligen Zahnes und dem Fußradius mindestens der Zahl Sieben und maximal der Zahl Elf:

$$7 \leq H_{th}/r \leq 11.$$

Gleichzeitig oder alternativ ist ein Quotient aus größter theoretischer Zahnhöhe des jeweiligen Zahnes und der theoretischen Zahnfußbreite mindestens dem Wert 0,9 und maximal dem Wert 1,3:

$$0,9 \leq H_{th}/B_{th} \leq 1,3.$$

Die theoretische Zahnfußbreite ist jeweils der Abstand zwischen zwei zueinander benachbarten der zahnfußseitigen Schnittkanten.

Mit der vorgenannten Geometrie ist an der Radnabenlagerung in der Drehmomentenverbindung zwischen Gelenkwelle und Rad eine Sollbruchstelle in der Stirnverzahnung geschaffen, die weg von sicherheitsrelevanten Teilen, zum Beispiel vom Radlager entfernt, angeordnet ist. Der durch Drehmomente um die Rotationsachse belastete Gesamtquerschnitt des Materials der Stirnverzahnung weist dadurch einen geringeren Widerstand gegen Verformungen auf, der bei Drehmomenten aus Überlastungen gezielt zur nachgebenden Verformung der Verzahnung führt. Jeder weitere durch die gleichen Drehmomente belastete und von der Stirnverzahnung entfernte Querschnitt des Materials der Radnabe weist höhere Widerstandsmomente auf. Der Gesamtquerschnitt ist dabei die Summe aller zeitgleich mit dem Einwirken des jeweiligen Gesamtdrehmomentes anteilig durch Drehmomente belasteten Einzelquerschnitte der Zähne, Zahnwurzeln und/oder aus Querschnitten im Material der Radnabe an den Übergängen zu den Zähnen. Bei Überlastung wird somit durch Zerstören des Zahneingriffs schlimmstenfalls der Antrieb zur Radnabe unterbrochen, die Radlagerung jedoch bleibt intakt.

Alternativ ist die Paarung aus den Stirnverzahnungen als eine Sicherheits-Ratschenkupplung ausgelegt. Die Radnabe und das Antriebselement sind mittels wenigstens eines Schraubbolzens axial mit Vorspannung gegeneinander verspannt. Der Schraubbolzen weist insgesamt, oder an jedem beliebigen Abschnitt/ Querschnitt seines Materials, jedoch auf jeden Fall an einer schwächsten Stelle - wenigstens eines beliebigen Querschnittes - einen geringeren Widerstand gegen Verformung durch Belastungen aus Drehmomenten auf, als jeder beliebige Abschnitt der Radlagereinheit, der durch die Drehmomente bzw. durch aus den Drehmomenten resultierende Kräfte belastet ist. Diese Maßnahme greift insbesondere in den Fällen, in denen die Stirnverzahnung bzw. die Paarung aufgrund des großen Teilkreismessers so starr ausgebildet ist, dass diese nicht als Sollbruchstelle geeignet ist.

Ein zentraler Bolzen oder mehrere um die Rotationsachse angeordnete Bolzen weisen einen Gesamtquerschnitt auf, der nach der Größe des geforderten Bruchmoments ausgelegt ist. Auf die Verzahnung wirkende Drehmomente bei Überlastungen werden in der Verzahnung aufgrund der erfindungsgemäßen Flankengeometrie in Axialkräfte umgesetzt, die den Bolzen axial soweit dehnen, dass die Zahnflanken aneinander aufsteigen und sich schließlich voneinander lösen, so dass die drehfeste Verbindung aufgehoben ist. Der Schraubbolzen ist axial zumindest elastisch aber auch plastisch nachgebend so verformbar, dass dieser geringeren Widerstand gegen plastische und elastische Verformung zumindest in axiale Richtung aufweist als ein durch die axiale Vorspannung und die Drehmomente zeitgleich belasteter Gesamtquerschnitt der Verzahnung. Der Widerstand ist eine Axialkraft auf die Schraubverbindung kleiner gleich einer axialen Lösekraft, bei der die ineinander greifenden Verzahnungen beginnen sich entgegen der Vorspannkraft voneinander zu lösen.

Es ist auch denkbar, an einer Stirnverzahnung eine Kombination aus Sollbruchstelle in der Stirnverzahnung und Dehnelement Bolzen zu verwirklichen.

Unter Widerstand ist in dieser Erfindung das Vermögen eines Flächenabschnittes des Materials Belastungen aus Biegung (Widerstandsmoment, Torsion, Zug und Druck) zu widerstehen zu verstehen. Die Belastungen sind zunächst als Moment um die Rotationsachse eingeleitet und dann an der Verzahnung in Axial- und Tangentialkraftkomponenten umgesetzt.

## Beschreibung der Zeichnungen

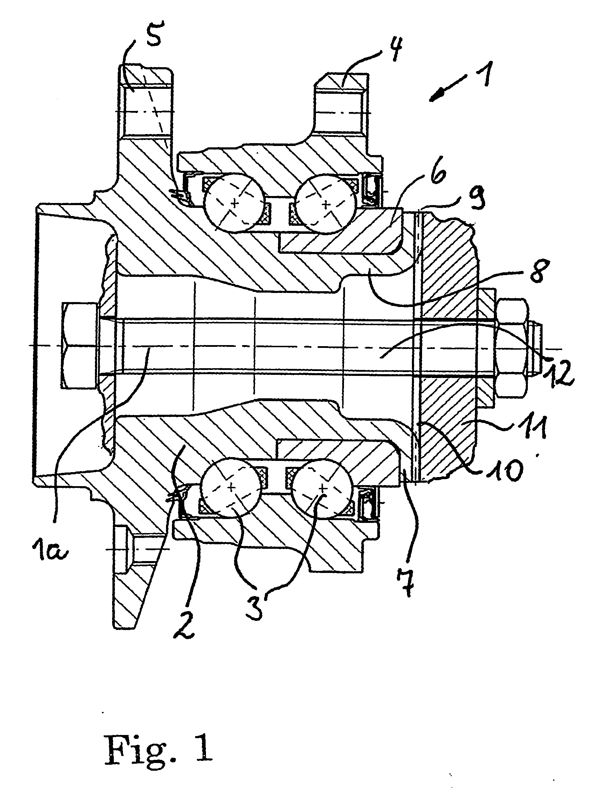

Figur 1 zeigt eine Radlageranordnung 1 mit einer Radnabe 2, zwei Reihen Wälzkörper 3 und einem Fahrzeugflansch 4. Die Radnabe 2 weist einen Flansch 5 zur Befestigung eines nicht dargestellten Fahrzeugrades auf und ist über die Wälzkörper 3 um die Rotationsachse 1a drehbar zum fahrzeugfesten Fahrzeugflansch 4 gelagert. Auf der Radnabe 2 sitzt ein Innenring 6 auf dem eine Reihe der Wälzkörper 3 abläuft. Der Innenring 6 ist mittels eines Bundes 7 axial auf der Radnabe 2 gehalten. Außerdem ist die Schrägkugellageranordnung mittels des Bundes 7 vorgespannt. Der Bund 7 ist einmaterialig mit einem hohlen Abschnitt 8 der Radnabe 2 ausgebildet und von diesem aus radial nach außen umgelegt.

In die in axiale Richtung gewandte Seite des Bordes 7 ist ein Ausführungsbeispiel einer erfindungsgemäßen Stirnverzahnung 9 spanlos durch umformen, wie Kaltfließpressen, Prägen oder Walzen eingebracht. Die Stirnverzahnung ist mit einer entsprechenden Gegenverzahnung 10 an einem nicht weiter dargestellten Antriebselement 11 gepaart. Die Verzahnungen 9 und 10 weisen zueinander die gleiche Anzahl an Zähnen 13 auf, sind einander axial zugewandt, greifen spielfrei ineinander und sind mittels eines Schraubbolzens 12 axial ineinander und gegeneinander verspannt.

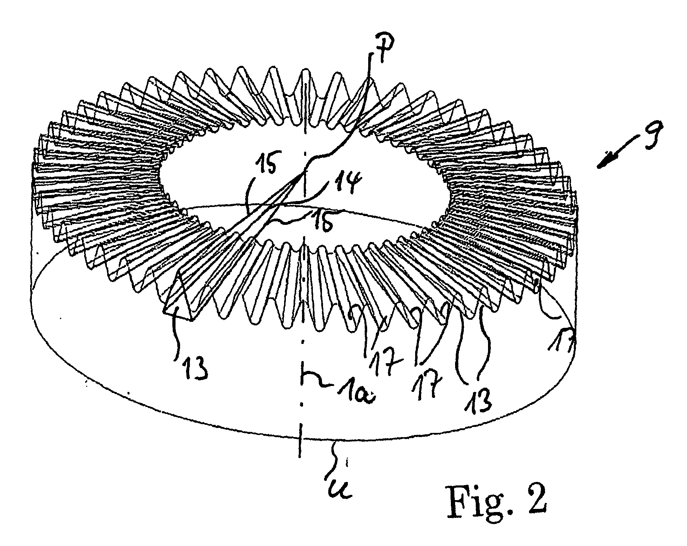

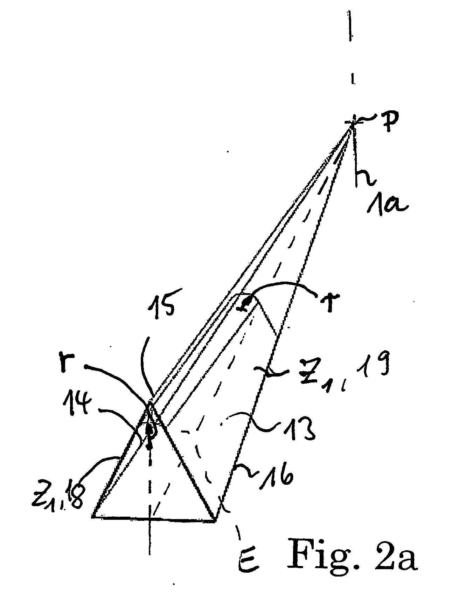

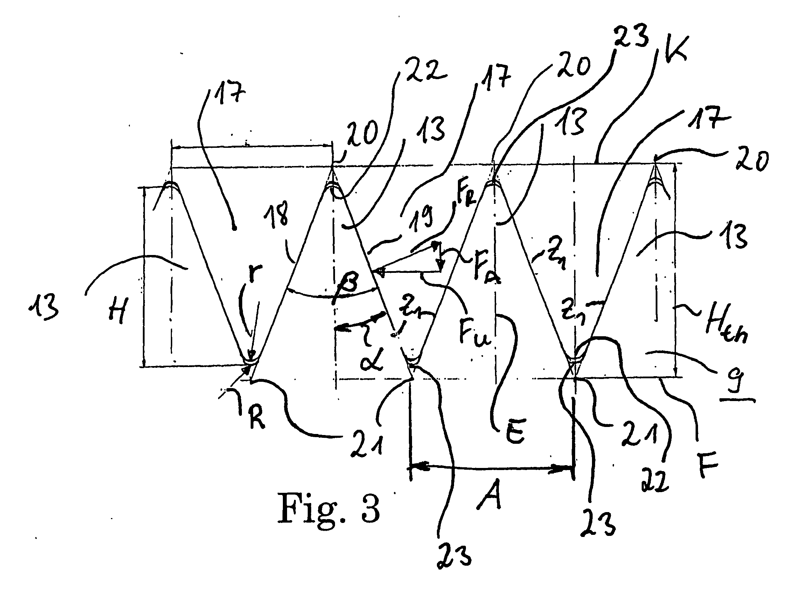

Ausführungsbeispiele der Verzahnungen 9 und 10 sind in Figur 2, 2a und 3 vereinfacht dargestellt. In Figur 2 ist die Verzahnung 9, 10 perspektivisch dargestellt und zeigt dabei wie der einzelne keilförmig ausgebildete Zahn 13 kopf-, fuß- und flankenseitig durch radial ausgerichtete geometrische Linien 14, 15, 16 beschrieben ist, die sich in dem Schnittpunkt P treffen. Der Schnittpunkt P ist der gemeinsame Schnittpunkt für alle radial verlaufenden geometrischen Linien des Zahnkranzes. Der Zahnwinkel $\beta$, das Zweifache des Zahnflankenwinkels $\alpha$ ist dabei über die gesamte radiale Erstreckung jedes einzelnen Zahnes 13 konstant.

Wie insbesondere aus Figur 2a erkennbar ist, ist die Zahnflanke durch eine Ebene beschrieben, die um den Flankenwinkel $\alpha$ zur gedachten Ebene E geneigt ist. Die Ebene E verläuft in Richtung mit abnehmenden Abstand A zu zwei umfangsseitig benachbarten Zahnlükken 17. Der Abstand wird mit zunehmender Annäherung an die Rotationsachse kleiner. Die Ebene E trifft in P auf die Ebenen Z1, die den Verlauf der Zahnflanken 18, 19 beschreiben. Die Linie 15 fällt ausgehend von höchster Zahnhöhe H außen zu P hin ab. Demnach nimmt die Zahnhöhe H von außen mit abnehmender radialer Entfernung zur Rotationsachse 1a hin ab.

Figur 3 zeigt den Querschnitt durch Zähne 13 der Verzahnung an der Stelle mit der höchsten Zahnhöhe H. Die Zahnlücken 17 der Stirnverzahnung 9 sind fast vollständig durch die Zähne der Gegenverzahnung 10 und die Lücken der Gegenverzahnung 10 fast vollständig durch die Zähne 13 der Stirnverzahnung 9 ausgefüllt. Es verbleibt ein axialer Spalt zwischen Zahnkopf 22 und Mitte 23 der Zahnlücke. Die einem der jeweiligen Zähne 13 gemeinsamen Ebenen Z1 treffen kopfseitig in der Schnittkante 20 aufeinander und sind jeweils mit $\alpha$ zu E geneigt. Die Schnittkanten 20 sind mit gleicher Teilung T zueinander angeordnet. Fußseitig treffen die Ebenen Z1 in der Schnittkante 21 aufeinander. Die Schnittkanten 20 oder 21 liegen in den Ebenen K bzw. F. Die theoretische Kopfhöhe $H_{th}$ zwischen der radialen Kopfebene K und der radialen Fußebene F ist bei konstantem Umfang U der Verzahnung 9 von $\alpha$ abhängig. Der im Bild senkrechte und an der Stirnverzahnung 9 axiale Abstand H ist bei unveränderter Höhe $H_{th}$ von den Radien Kopfradius R und Fußradius r abhängig. R ist größer r (R > r). Die spielfreie Paarung der Verzahnungen 9 und 10 ist so abgesichert, da in den Zahnlücken 17 immer ein Abstand zwischen Zahnkopf 22 und Mitte 23 Zahnlücke 17 verbleibt. Drehmomente Md um die Rotationsachse 1a verursachen in der Verzahnung Kraftkomponenten FR, FA und FU.

Durch die mittels des Schraubbolzens 12 gegeneinander verspannten Verzahnungen 9,10 wird die Kraftkomponente FA von einer weiteren Kraftkomponenten überlagert.

## Bezugszeichen

1    Radlageranordnung

1a    Rotationsachse

2    Radnabe

3    Wälzkörper

4    Fahrzeugflansch

5    Flansch

6    Innenring

7    Bund

8    Abschnitt

9    Stirnverzahnung

10    Gegenverzahnung

11    Antriebselement

12    Schraubbolzen

13    Zahn

14      geometrische Linie

15      geometrische Linie

16      geometrische Linie

17      Zahnlücke

18      Zahnflanke

19      Zahnflanke

20      Schnittkante

21      Schnittkante

22      Zahnkopf

23      Mitte

**Patentansprüche**

1. Stirnverzahnung (9) eines in Umfangsrichtung um eine Rotationsachse (1a) verlaufenden Zahnkranzes an einer Radlageranordnung (1) für eine antreibbare Radnabe (2), wobei die Stirnverzahnung (9) für einen spielfreien Eingriff in eine der Stirnverzahnung (9) zugewandte Gegenverzahnung (10) vorgesehen ist und dabei die Zähne (13) der Stirnverzahnung (9) so keilförmig ausgebildet sind, dass die geometrischen Linien (14, 15, 16) der Stirnverzahnung (9) zentral in einem gemeinsamen Punkt auf der Rotationsachse (1a) zusammentreffen und sich die Zähne (13) somit in radiale Richtung auf die Rotationsachse (1a) erstrecken, **dadurch gekennzeichnet, dass** die für den Eingriff vorgesehenen Flanken (18, 19) der Zähne (13) der Stirnverzahnung (9) jeweils mit einem Flankenwinkel ($\alpha$) größer als 20° und kleiner als 30° zu einer gedachten und von der Rotationsachse (1a) abgehenden sowie dabei den jeweiligen der Zähne (13) symmetrisch teilenden Teilungsebene geneigt sind.

2. Stirnverzahnung nach Anspruch 1, **dadurch gekennzeichnet, dass** Zahnlücken (17) der Stirnverzahnung (9) zumindest zwischen jeweils zwei an der Zahnlücke (17) einander gegenüberliegenden der Flanken (18, 19) mit wenigstens einem Fußradius konkav verrundet sind.

3. Stirnverzahnung nach Anspruch 2, **dadurch gekennzeichnet, dass** der Zahnkopf des jeweiligen der Zähne (13) zumindest von einer Flanke (17) zur anderen Flanke (17) eines jeweiligen der Zähne (13) mit wenigstens einem konvexen Kopfradius verrundet ist, wobei der Kopfradius größer ist als der Fußradius.

4. Stirnverzahnung nach Anspruch 1, **dadurch gekennzeichnet, dass** ein Quotient aus größter theoretischer Zahnhöhe des jeweiligen Zahnes (13) und dem Kopfradius mindestens der Zahl Fünf und maximal der Zahl Neun entspricht, wobei die theoretische Zahnhöhe in der Teilungsebene der größte axiale Abstand zwischen einer ersten Schnittkante (20) und einer zweiten Schnittkante (21) ist, und wobei sich in den Schnittkanten (20, 21) jeweils zwei einander zugewandte geometrische Ebenen schneiden, und dabei jede der Ebenen eine der Flanken (18,19) geometrisch begrenzt, wobei sich in der ersten Schnittkante (20) die geometrischen Ebenen der Flanken (18, 19) eines Zahnes (13) zahnkopfseitig schneiden und sich in der zweiten Schnittkante (21) die geometrischen Ebenen von jeweils zwei an jeweils einer Zahnlücke (17) gegenüberliegenden Flanken (18, 19) zueinander benachbarter Zähne (13) zahnfußseitig schneiden.

5. Stirnverzahnung nach Anspruch 1, **dadurch gekennzeichnet, dass** ein Quotient aus größter theoretischer Zahnhöhe des jeweiligen Zahnes (13) und dem Fußradius mindestens der Zahl Sieben und maximal der Zahl Elf entspricht, wobei die theoretische Zahnhöhe in der Teilungsebene der größte axiale Abstand zwischen einer ersten Schnittkante (20) und einer zweiten Schnittkante (21) ist, und wobei sich in den Schnittkanten (20, 21) jeweils zwei einander zugewandte geometrische Ebenen schneiden, und dabei jede der Ebenen eine der Flanken (18, 19) geometrisch begrenzt, wobei sich in der ersten Schnittkante (20) die geometrischen Ebenen der Flanken (18, 19) eines Zahnes (13) zahnkopfseitig schneiden und sich in der zweiten Schnittkante (21) die geometrischen Ebenen von jeweils zwei an jeweils einer Zahnlücke (17) gegenüberliegenden Flanken (18, 19) zueinander benachbarter Zähne (13) zahnfußseitig schneiden.

6. Stirnverzahnung nach Anspruch 1, **dadurch gekennzeichnet, dass** ein Quotient aus größter theoretischer Zahnhöhe des jeweiligen Zahnes (13) und der theoretischen Zahnfußbreite mindestens dem Wert 0,9 und maximal dem Wert 1,3 entspricht, wobei die theoretische Zahnhöhe in der Teilungsebene der größte axiale Abstand zwischen einer ersten Schnittkante (20) und einer zweiten Schnittkante (21) ist, und wobei sich in den Schnittkanten (20, 21) jeweils zwei einander zugewandte geometrische Ebenen schneiden, und dabei jede der Ebenen eine der Flanken (18, 19) geometrisch begrenzt, wobei sich in der ersten Schnittkante (20, 21) die geometrischen Ebenen der Flanken (18, 19) eines Zahnes (13) zahnkopfseitig schneiden und sich in der zweiten Schnittkante (21) die geometrischen Ebenen von jeweils zwei an jeweils einer Zahnlücke (17) gegenüberliegenden Flanken (18, 19) zueinander benachbarter Zähne (13) zahnfußseitig schneiden und wobei die theoretische Zahnfußbreite jeweils der Abstand zwischen zwei zueinander benachbarten der zweiten Schnittkanten (21) ist.

7.  Stirnverzahnung nach Anspruch 1, **dadurch gekennzeichnet, dass** ein durch Drehmomente um die Rotationsachse (1a) belasteter Gesamtquerschnitt des Materials der Stirnverzahnung (9) einen geringeren Widerstand gegen Verformungen infolge der Drehmomente aufweist als jeder weitere beliebige durch die gleichen Drehmomente belastete Querschnitt des Materials der Radnabe (2), wobei der Gesamtquerschnitt die Summe aller anteilig durch Drehmomente belasteten Einzelquerschnitte des einteilig mit der Radnabe (2) ausgebildeten Materials der Stirnverzahnung (9) ist.

8.  Radlageranordnung (1) mit einer Stirnverzahnung (9) nach Anspruch 1, bei der die Gegenverzahnung (10) an einem mit der Radnabe (2) axial verspannten Antriebselement ausgebildet ist, wobei die Radnabe (2) und das Antriebselement mittels wenigstens eines Schraubbolzens (12) axial mit Vorspannung gegeneinander verspannt sind, **dadurch gekennzeichnet, dass** wenigstens ein beliebiger Dehnungsabschnitt des axial verspannten Schraubbolzens (12) einen kleineren Widerstand gegen Verformung durch Drehmomente auf die Stirnverzahnung (9) aufweist als jeder weitere beliebige durch die gleichen Drehmomente belastete Querschnitt des Materials der Radnabe (2).

9.  Radlageranordnung nach Anspruch 8, **dadurch gekennzeichnet, dass** die Stirnverzahnung (9) an einem Bund (7) der Radnabe (2) ausgebildet ist, mit dem wenigstens ein auf der Radnabe (2) sitzenden Innenring für wenigstens eine Reihe Wälzkörper zumindest axial auf der Radnabe (2) gehalten ist, wobei Bund (7) aus einem hohlen Abschnitt der Radnabe (2) radial nach außen geformt ist.

**Claims**

1.  Face spline (9) of a toothed rim which extends about a rotational axis (1a) in the circumferential direction on a wheel bearing arrangement (1) for a driven wheel hub (2), the face spline (9) being provided for playfree engagement into the mating spline (10) which faces the face spline (9), and the teeth (13) of the face spline (9) being of wedge-shaped configuration in such a way that the geometric lines (14, 15, 16) of the face spline (9) meet centrally at a common point on the rotational axis (1a) and the teeth (13) therefore extend in the radial direction toward the rotational axis (1a), **characterized in that** those flanks (18, 19) of the teeth (13) of the face spline (9) which are provided for the engagement are inclined in each case at a flank angle ($\alpha$) greater than 20° and smaller than 30° with respect to an imaginary pitch plane which leads away from the rotational axis and in the process divides the respective tooth (13) symmetrically.

2.  Face spline according to Claim 1, **characterized in that** tooth gaps (17) of the face spline (9) are rounded concavely with at least one root radius at least between in each case two of the flanks (18, 19) which lie opposite one another at the tooth gap (17).

3.  Face spline according to Claim 2, **characterized in that** the tooth tip of the respective tooth (13) is rounded with at least one convex tip radius at least from one flank (17) to the other flank (17) of the respective tooth (13), the tip radius being greater than the root radius.

4.  Face spline according to Claim 1, **characterized in that** a quotient from the greatest theoretical tooth height of the respective tooth (13) and the tip radius corresponds at least to the number five and at most to the number nine, the theoretical tooth height in the pitch plane being the greatest axial spacing between a first cut edge (20) and a second cut edge (21), and in each case two geometric planes which face one another intersecting in the cut edges (20, 21), and each of the planes delimiting one of the flanks (18, 19) geometrically here, the geometric planes of the flanks (18, 19) of one tooth (13) intersecting in the first cut edge (20) on the tooth tip side and the geometric planes of in each case two flanks (18, 19), which lie opposite one another at in each case one tooth gap (17), of mutually adjacent teeth (13) intersecting in the second cut edge (21) on the tooth root side.

5.  Face spline according to Claim 1, **characterized in that** a quotient from the greatest theoretical tooth height of the respective tooth (13) and the root radius corresponds at least to the number seven and at most to the number eleven, the theoretical tooth height in the pitch plane being the greatest axial spacing between a first cut edge (20) and a second cut edge (21), and in each case two geometric planes which face one another intersecting in the cut edges (20, 21), and each of the planes delimiting one of the flanks (18, 19) geometrically here, the geometric planes of the flanks (18, 19) of one tooth (13) intersecting in the first cut edge (20) on the tooth tip side and the geometric planes of in each case two flanks (18, 19), which lie opposite one another at in each case one tooth gap (17), of mutually adjacent teeth (13) intersecting in the second cut edge (21) on the tooth root side.

6. Face spline according to Claim 1, **characterized in that** a quotient from the greatest theoretical tooth height of the respective tooth (13) and the theoretical tooth root width corresponds at least to the value 0.9 and at most to the value 1.3, the theoretical tooth height in the pitch plane being the greatest axial spacing between a first cut edge (20) and a second cut edge (21), and in each case two geometric planes which face one another intersecting in the cut edges (20, 21), and each of the planes delimiting one of the flanks (18, 19) geometrically here, the geometric planes of the flanks (18, 19) of one tooth (13) intersecting in the first cut edge (20) on the tooth tip side and the geometric planes of in each case two flanks (18, 19), which lie opposite one another at in each case one tooth gap (17), of mutually adjacent teeth (13) intersecting in the second cut edge (21) on the tooth root side, and the theoretical tooth root width being in each case the spacing between two mutually adjacent second cut edges (21).

7. Face spline according to Claim 1, **characterized in that** an overall cross section of the material of the face spline (9), which overall cross section is loaded by torques about the rotational axis (1a), has a lower resistance to deformations as a consequence of the torques than any further arbitrary cross section of the material of the wheel hub (2), which cross section is loaded by the same torques, the overall cross section being the sum of all individual cross sections, which are loaded proportionally by torques, of the material of the face spline (9), which material is configured in one piece with the wheel hub (2).

8. Wheel bearing arrangement (1) having the face spline (9) according to Claim 1, in which the mating spline (10) is formed on a drive element which is clamped axially with the wheel hub (2), the wheel hub (2) and the drive element being clamped axially with prestress against one another by means of at least one threaded bolt (12), **characterized in that** at least one arbitrary expansion section of the axially clamped threaded bolt (12) has a lower resistance to deformation as a result of torques exerted on the face spline (9) than any further arbitrary cross section of the material of the wheel hub (2), which cross section is loaded by the same torques.

9. Wheel bearing arrangement according to Claim 8, **characterized in that** the face spline (9) is configured on the collar (7) of the wheel hub (2), by way of which collar (7) at least one inner ring which is seated on the wheel hub (2) for at least one row of rolling bodies is held at least axially on the wheel hub (2), the collar (7) being formed radially to the outside from a hollow section of the wheel hub (2).

## Revendications

1. Denture droite (9) d'une couronne dentée s'étendant dans la direction périphérique autour d'un axe de rotation (1a) sur un agencement de palier de roue (1) pour un moyeu de roue entraînable (2), la denture droite (9) étant prévue pour un engagement sans jeu dans une denture conjuguée (10) tournée vers la denture droite (9), et les dents (13) de la denture droite (9) étant en l'occurrence réalisées en forme de clavettes de telle sorte que les lignes géométriques (14, 15, 16) de la denture droite (9) convergent centralement en un point commun sur l'axe de rotation (1a) et les dents (13) s'étendent ainsi dans la direction radiale sur l'axe de rotation (1a), **caractérisée en ce que** les flancs (18, 19) des dents (13) de la denture droite (9) prévus pour l'engagement sont inclinés à chaque fois avec un angle de flanc ($\alpha$) supérieur à 20° et inférieur à 30° par rapport à un plan de séparation imaginaire et partant de l'axe de rotation et divisant symétriquement les dents respectives (13).

2. Denture droite selon la revendication 1, **caractérisée en ce que** des espaces entre les dents (17) de la denture droite (9) sont arrondis de manière concave avec au moins un rayon de base au moins entre à chaque fois deux des flancs (18, 19) opposés l'un à l'autre au niveau de l'espace entre les dents (17).

3. Denture droite selon la revendication 2, **caractérisée en ce que** la tête de dent de la dent respective (13) est arrondie avec au moins un rayon de tête convexe au moins d'un flanc (17) à l'autre (17) d'une des dents respectives (13), le rayon de tête étant supérieur au rayon de base.

4. Denture droite selon la revendication 1, **caractérisée en ce qu'**un quotient de la hauteur de dent théorique maximale de la dent respective (13) et du rayon de tête correspond à au moins le chiffre cinq et au plus le chiffre neuf, la hauteur de dent théorique dans le plan de séparation étant la plus grande distance axiale entre une première arête de coupe (20) et une deuxième arête de coupe (21), et à chaque fois deux plans géométriques tournés l'un vers l'autre se coupant dans les arêtes de coupe (20, 21), et en l'occurrence chacun des plans limitant géométriquement l'un des flancs (18, 19), les plans géométriques des flancs (18, 19) d'une dent (13) se coupant du côté de la tête de dent dans la première arête de coupe (20) et les plans géométriques de deux flancs respectifs opposés (18, 19) de dents mutuellement adjacentes (13) au niveau d'un espace entre les dents (17) respectif se coupant du côté de la base de dent dans la deuxième arête de coupe (21).

5. Denture droite selon la revendication 1, **caractéri-**

sée en ce qu'un quotient de la hauteur de dent théorique maximale de la dent respective (13) et du rayon de base correspond à au moins le chiffre sept et au plus le chiffre onze, la hauteur de dent théorique dans le plan de séparation étant la plus grande distance axiale entre une première arête de coupe (20) et une deuxième arête de coupe (21), et à chaque fois deux plans géométriques tournés l'un vers l'autre se coupant dans les arêtes de coupe (20, 21), et en l'occurrence chacun des plans limitant géométriquement l'un des flancs (18, 19), les plans géométriques des flancs (18, 19) d'une dent (13) se coupant du côté de la tête de dent dans la première arête de coupe (20) et les plans géométriques de deux flancs respectifs opposés (18, 19) de dents mutuellement adjacentes (13) au niveau d'un espace entre les dents (17) respectif se coupant du côté de la base de dent dans la deuxième arête de coupe (21).

6. Denture droite selon la revendication 1, **caractérisée en ce qu'**un quotient de la hauteur de dent théorique maximale de la dent respective (13) et de la largeur de base de dent théorique correspond au moins à la valeur 0,9 et au plus à la valeur 1,3, la hauteur de dent théorique dans le plan de séparation étant la plus grande distance axiale entre une première arête de coupe (20) et une deuxième arête de coupe (21), et à chaque fois deux plans géométriques tournés l'un vers l'autre se coupant dans les arêtes de coupe (20, 21), et en l'occurrence chacun des plans limitant géométriquement l'un des flancs (18, 19), les plans géométriques des flancs (18, 19) d'une dent (13) se coupant du côté de la tête de dent dans la première arête de coupe (20) et les plans géométriques de deux flancs respectifs opposés (18, 19) de dents mutuellement adjacentes (13) au niveau d'un espace entre les dents (17) respectif se coupant du côté de la base de dent dans la deuxième arête de coupe (21) et la largeur de base de dent théorique étant à chaque fois la distance entre deux arêtes de coupe mutuellement adjacentes des deuxièmes arêtes de coupe (21).

7. Denture droite selon la revendication 1, **caractérisée en ce qu'**une section transversale totale du matériau de la denture droite (9), sollicité par des couples autour de l'axe de rotation (1a) présente une plus faible résistance aux déformations dues aux couples que toute autre section transversale quelconque du matériau du moyeu de roue (2) sollicitée par les mêmes couples, la section transversale totale étant la somme de toutes les sections transversales individuelles, sollicitées en proportion par des couples, du matériau de la denture droite (9) réalisé d'une seule pièce avec le moyeu de roue (2).

8. Agencement de palier de roue (1) comprenant une denture droite (9) selon la revendication 1, dans lequel la denture conjuguée (10) est réalisée sur un élément d'entraînement serré axialement avec le moyeu de roue (2), le moyeu de roue (2) et l'élément d'entraînement étant serrés l'un contre l'autre au moyen d'au moins un boulon fileté (12) axialement avec précontrainte, **caractérisé en ce qu'**au moins une section d'étirement quelconque du boulon fileté serré axialement (12) présente une plus petite résistance à la déformation par des couples sur la denture droite (9) que tout autre section transversale quelconque du matériau du moyen de roue (2) sollicitée par les mêmes couples.

9. Agencement de palier de roue selon la revendication 8, **caractérisé en ce que** la denture droite (9) est réalisée sur un épaulement (7) du moyeu de roue (2), avec lequel au moins une bague intérieure reposant sur le moyeu de roue (2), pour au moins une rangée de corps de roulement, est retenue au moins axialement sur le moyeu de roue (2), l'épaulement (7) étant formé radialement vers l'extérieur par une portion creuse du moyeu de roue (2).

Fig. 1

Fig. 2

Fig. 2a

Fig. 3

EP 1 853 436 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 3116720 C1